# EUROPEAN PATENT APPLICATION

(11) **EP 4 821 904 A1**
(43) Date of publication of application: **14.10.2026**
(21) Application number: 25169148.1
(22) Date of filing: 08.04.2025
(51) Int. Cl.: C04B 28/00, C04B 111/10

(54) **BUILDING MATERIALS BASED ON CLAY CONTAINING SOIL**

(71) Applicant: Sika Technology AG, 6340 Baar (CH)
(72) Inventor: JUILLAND, Patrick, 8048 Zürich (CH); KURZ, Christophe, 8048 Zürich (CH); BÜRGE, Christian, 8048 Zürich (CH); FRUNZ, Lukas, 8048 Zürich (CH); KELCH, Steffen, 8048 Zürich (CH); WEIDMANN, Jürg, 8048 Zürich (CH); WEINKAUF, Annette, 8048 Zürich (CH)
(74) Representative: Sika Patent Attorneys

(57) **Abstract**

The present invention relates to building materials based on clay containing soil and methods of manufacturing solid construction materials based on clay containing soil. The present invention uses a combination of polyalykoxylated polymers and divalent cations to improve the workability of materials based on clay containing soil.

## Description

### Technical Field

The present invention relates to building materials based on clay containing soil and methods of manufacturing solid construction materials based on clay containing soil.

### Background of the invention

It is known since thousands of years to use clay containing soil as a building material. For example, humans have produced and still are producing adobe and used them for the construction of houses in many parts of the world. The use of clay containing soil has many advantages over other building materials such as, for example, concrete. One advantage is that clay containing soils are available in abundance in almost every region of earth. Another advantage is that building materials based on clay containing soil can be free from calcined materials such as cement and thus have much less embodied energy.

When using clay containing soil for building materials it is necessary to first deflocculate the clay particles. Thereby, a workable mixture is obtained, typically an aqueous slurry, that can be brought into a desired shape. It is then necessary to bring about a re-flocculation or coagulation of clay particles for the shaped body to retain its form.

Different ways are known to achieve this deflocculation and re-flocculation of clay particles. For example, WO 2021/180318 (ETH Zürich) discloses combinations of dispersing agent, for example aluminates, phosphates, silicates and/or polyacrylates, and coagulating agent, for example magnesium oxide and/or calcium oxide.

It is further known to use polyalkoxylated polymers as dispersants for cement-based building materials. For example, EP 0056627 (Nippon Shokubai) discloses the use of copolymers of polyethoxylated methallyl alcohol and maleic acid as cement dispersants in mortar. For example, EP 1799731 (Construction Research & Technology) discloses polycondensation products of formaldehyde and polyalkoxylated aromatics.

However, such polyalkoxylated polymers are not known as dispersants for building materials based on clay containing soil. Rather, polyalkoxylated polycarboxylate ethers have been described as clay mitigating agents, for example in WO 2013/164471 (W.R. Grace). As clay mitigating agents, polyalkoxylated polycarboxylate ethers can bring about the deflocculation but no re-flocculation is possible.

There remains a need for effective solutions to make clay containing soils available for building materials, especially for the deflocculation and re-flocculation of clay particles.

### Summary of the invention

It is an object of the present invention to provide building materials based on clay containing soil that show improved workability, or improved flow properties. It is another object of the present invention to provide building materials based on clay containing soil that show improved workability, or flow properties, and wherein the workability is reduced with time. Thereby, the production of solid construction materials is facilitated. It is also an object of the present invention to provide methods for the manufacture of solid construction materials based on clay containing soil.

It has surprisingly been found that a combination of polyalkoxylated polymers as dispersants and of at least one source of divalent cations, preferably calcium ions can improve the workability of building materials based on clay containing soil in the desired way.

The objective of the present invention is therefore solved by a building material as claimed in claim 1.

Other aspects of the present invention are the subject matter of independent claims.

Preferred embodiments of the present invention are the subject matter of dependent claims.

### Detailed Ways

In a first aspect, the present invention relates to a building material comprising
a) clay containing soil,
b) at least one dispersant selected from the group consisting of polyalkoxylated polymers, and
c) at least one source of divalent cations.

Soil is the top layer of the Earth's surface. It comprises mineral particles, organic matter, water, air, and living organisms. The mineral particles are in particular formed from the weathering of rocks and generally belong to one of the groups of clay, silt, sand, or gravel. The term organic matter includes living organisms such as microorganisms.

Clays are hydrated mineral aluminosilicates of a very fine particle size. Within the present context, the term clay does not encompass calcined clays. Within the present context it is preferred that the clay is selected from phyllosilicate and/or feldspar minerals, in particular from the group consisting of kaolinite, smectite, montmorillonite, illite, bentonite, hectorite, chlorite, anorthite, microcline, albite, oligoclase.

Clay, silt, sand, and gravel can be differentiated by the particle size. Especially, clay has a fine particle size, preferably a particle size D90 of between 1 - 10 µm. Especially, silt has an intermediate particle size, preferably a particle size D90 of between 10 - 100 µm. Especially, sand has a coarse particle size, preferably a particle size D90 of between 0.1 - 4 mm. Especially, gravel has a very coarse particle size, preferably gravel is composed of particles having a size of more than 4 mm and up to several cm, for example 64 mm. The particle size D90 is the size of particles in a particle size distribution curve where 90% of the particles are smaller and only 10% are bigger. The particle size distribution curve of materials having particle sizes between 10 nm to 4 mm can be measured by laser diffraction according to standard ISO 13320:2020. The particle size of materials with particles in the mm range and especially having particle sizes > 4 mm can be measured by sieve analysis, for example according to standard EN 933-1.

The term "fines", within the present context relates to particles having a particle size of below 100 µm measured by laser diffraction according to standard ISO 13320:2020. Thus, the fines in a building material of the present invention in particular comprise clay and silt particles.

It is preferred within the present context, that the clay containing soil is soil as extracted. It is therefore preferred, that the clay containing soil comprises clay, silt, sand, gravel, organic matter, water, and air. It is possible to further process the soil after extraction to remove certain constituents of the soil. For example, it is possible to de-aerate, to wash, to dry, to heat, and/or to sieve the extracted soil. It can be particularly preferred to wash the extracted soil to remove organic matter, to dry the extracted soil to remove water, especially unbound water, to heat or otherwise treat the extracted soil to kill living microorganisms, and/or to sieve the extracted soil to adjust the particle size, especially to remove particles having a size of > 4 mm. However, within the present context, the extracted soil is not calcined.

It is particularly preferred within the present context, that the clay containing soil comprises or consists of clay particles, preferably with a particle size D90 between 1 - 10 µm, silt particles, preferably with a particle size D90 between 10 - 100 µm, sand particles, preferably with a particle size D90 between 0.1 - 4 mm. Gravel having a particle size of more than 4 mm, especially >4 - 64 mm may additionally be present in the clay containing soil. Thereby, the particle size D90 is measured by laser diffraction according to standard ISO 13320:2020 up to a size of 4mm, the size of larger particles is measured by sieve analysis according to standard EN 933-1.

The amount of clay in naturally occurring soil may vary to a large extent. The clay content of soil can be determined very roughly by sedimentation methods or by feeling the soil texture. During sedimentation of soil, clays tend to float on top while silt and sand settle. Additionally, soil comprising clay feels sticky and smooth when rubbed, while silty or sandy soil feels more gritty. The content of clay in soil can be quantified, for example by x-ray diffraction (XRD). XRD analysis of soils to determine the clay content is known to the skilled person. In particular, the skilled person is aware of suitable methods to prepare soil for analysis by XRD, including steps of drying, grinding, sieving, and removal of soluble salts, organic matter, and oil contaminations.

According to embodiments, in a building material of the present invention, clay is comprised in at least 5 w%, preferably at least 10 w%, more preferably at least 20 w%, still more preferably between 20 - 70 w%, especially between 25 - 60 w%, based on the total dry weight of the clay containing soil.

It has been found that polyalkoxylated polymers can be used as dispersants for clay containing soils when combined with at least one source of divalent cations.

According to embodiments, in a building material of the present invention, the at least one dispersant is comprised in 0.05 - 2.0 w%, preferably 0.1 - 1.0 w%, especially 0.15 - 0.50 w%, based on the total dry weight of the clay containing soil.

Divalent cations within the present context preferably are selected from the group consisting of Mg²⁺, Ca²⁺, Mn²⁺, Fe²⁺, Co²⁺, Ni²⁺, Zn²⁺. The at least one source of divalent cations preferably is a salt of one or more of the preferred divalent cations.

Preferably, the at least one source of divalent cations is selected from salts of Mg²⁺ and/or Ca²⁺. In particular, the at least one source of divalent cations is selected from the group consisting of chlorides, oxides, hydroxides, sulfates, nitrates, nitrites, phosphates, carbonates, and/or bicarbonates of Mg²⁺ and/or Ca²⁺ as well as carboxylates of Mg²⁺ and/or Ca²⁺, such as formiates, acetates, lactates, citrates, and tartrates. Particularly preferred sources of divalent cations are magnesium hydroxide, magnesium oxide, calcium hydroxide, calcium nitrate, calcium formiate, and calcium acetate.

Within the present context, clays, pozzolans, and latent hydraulic materials are not considered to be a source of divalent cations, because divalent cations present therein are locked up in amorphous or crystalline phases and not available to bring about the desired effects.

According to a particularly preferred embodiment, the at least one source of divalent cations is selected from calcium hydroxide. Calcium hydroxide can be in the form of hydrated lime, caustic lime, builders' lime, slaked lime, pickling lime, cement kiln dust, class C fly ash, or pulp and paper mill fly ash. Calcium oxide can also be considered a source of calcium hydroxide, because calcium oxide forms calcium hydroxide when in contact with water.

According to embodiments, in a building material of the present invention, the at least one source of divalent cation is comprised in 0.1 - 5 w%, preferably 1 - 3 w% based on the total dry weight of the clay containing soil.

Thereby, preferably, in a building material of the present invention, the at least one divalent cation, especially Mg²⁺ and/or Ca²⁺ is comprised in 1 - 1000 mmol, preferably 10 - 100 mmol, relative to 100g of dry clay containing soil.

According to particularly preferred embodiments, in a building material of the present invention, calcium hydroxide is comprised in 0.1 - 5 w%, preferably 1 - 3 w% based on the total dry weight of the clay containing soil.

It has been found that within such limits, deflocculation and re-flocculation of clay is possible and workable building materials may be obtained. A workable building material thereby is a material that has a certain flowability and that can be brought into a desired shape. In particular, a measure for the workability, in particular for the flow properties, is the slump flow of a building material measured according to standard EN 12350-5. A high slump flow is indicative for a good workability.

Without wishing to be bound by theory, it is believed that the divalent cations compete with the clay particles for binding sites of the inventive dispersants. Thus, the divalent cations complex the at least one dispersant of the present invention, causing clay particles to re-flocculate. Thereby, the workability can be adjusted to first increase and then decrease over time. Thus, a building material of the present invention can be brought into shape and will retain its shape after some time.

According to embodiments, the at least one dispersant is selected from polycarboxylate ether and/or polyalkoxylated aryl formaldehyde condensates.

Especially, the polyalkoxylated aryl formaldehyde condensates are condensates of at least one of an aromatic or heteroaromatic compound having from 5 to 10 carbon atoms, heteroatoms or both carbon and heteroatoms and which contains, on average, from at least 1 to 300 of at least one of an oxyethylene and an oxypropylene group per molecule which are bound via an O or N atom, for example in an ether, ester, amine, or amide linkage, especially ester linkage, to said aromatic or heteroaromatic compound; and at least one aromatic compound selected from the group consisting of a phenol, a phenol ether, a naphthol, a naphthol ether, an aniline, a furfuryl alcohol and an aminoplastic former selected from the group consisting of a melamine, a melamine derivative, urea, a urea derivative, and a carboxamide; and formaldehyde.

Polycarboxylate ethers (abbreviated PCE) are known to the skilled person. Especially, PCE are comb polymers having a carbon backbone with carboxylate moieties attached thereto and having side chains comprising polyalkylene oxides attached via ether, ester, or amide bonds to the carbon backbone of the comb polymer.

It has been found that dispersants comprising polyalkylene oxide units that can be cleaved by water at elevated pH are particularly useful within the present context. Elevated pH means a pH of at least 8, preferably at least 10, more preferably at least 12.

Very preferably, the polyalkoxylated polymers of the present invention are polymers where the polyalkylene oxide groups are bound to the polymer backbone via ester linkage. It has been found that polyalkoxylated polymers having polyalkylene oxide groups are bound to the polymer backbone via ester linkage can bring about the desired deflocculation and re-flocculation of clay particles, in particular at a pH of at least 8, preferably at least 10, more preferably at least 12. Thereby, the workability can be adjusted to first increase and then decrease over time. Thus, a building material of the present invention can be brought into shape and will retain its shape after some time.

It is therefore preferred that the at least one dispersant is a polycarboxylate ether comprising
a) monomeric units of general formula (I) 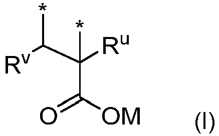 wherein
   R^{u} is H or methyl,
   R^{v} is H or COOM,
   M is selected from H, alkali metal, alkali earth metal, ammonium, or organic ammonium group,
   and wherein * describes the binding site into the polymer chain, and
b) monomeric units of general formula (II) 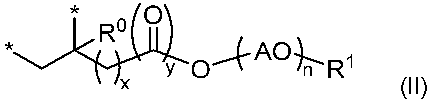 wherein
   R⁰ is H or methyl,
   R¹ is H, C1-C20 alkyl, aralkyl or aryl,
   A independently of another are alkylene groups with 2 - 4 C atoms,
   x = 0, 1 or 2,
   y = 0 or 1, and
   n = 10 - 300,
   and wherein * describes the binding site into the polymer chain,
   and wherein a molar ratio of monomeric units of general formula (I) to monomeric units of general formula (II) is between 0.5 - 5, preferably between 1 - 2.

Very preferably, the polycarboxylate ether comprises ester bonds. Thus, according to preferred embodiments, in general formula (II) y = 1.

According to preferred embodiments, 100 mol% of monomeric units of a polycarboxylate ether of the present invention are of general formula (I) and (II) under the provision that the molar ratio of monomeric units of general formula (I) to monomeric units of general formula (II) is between 0.5 - 5, preferably between 1 - 2.

Preferably, in a polycarboxylate ether of the present invention R^{u} is H, R^{v} is H, M is selected from H, Na, Ca, or organic ammonium group, R⁰ is H, R¹ is methyl, A is ethylene, x = 0, y = 1, and n = 20 - 60, preferably n = 40 - 60.

Preferably, a building material of the present invention is free from cement, especially is free from Portland cement. Free from cement means that the content of cement, especially of Portland cement, is lower than 1 w%, preferably is lower than 0.1 w%, especially is 0 w%, based on the total weight of the building material.

A preferred building material of the present invention comprises
a) clay containing soil,
b) 0.05 - 2.0 w%, preferably 0.1 - 1.0 w%, especially 0.15 - 0.50 w%, based on the total dry weight of the clay containing soil, of at least one dispersant selected from polycarboxylate ether, and
c) 0.1 - 5 w%, preferably 1 - 3 w% based on the total dry weight of the clay containing soil, of at least one source of divalent cations, especially calcium hydroxide.

A preferred building material of the present invention comprises
a) clay containing soil,
b) 0.05 - 2.0 w%, preferably 0.1 - 1.0 w%, especially 0.15 - 0.50 w%, based on the total dry weight of the clay containing soil, of at least one dispersant selected from polycarboxylate ether, and
c) 0.1 - 5 w%, preferably 1 - 3 w% based on the total dry weight of the clay containing soil, of at least one source of divalent cations, especially calcium hydroxide,
wherein the clay containing soil comprises or consists of clay particles, preferably with a particle size D90 between 1 - 10 µm, silt particles, preferably with a particle size D90 between 10 - 100 µm, and sand particles, preferably with a particle size D90 between 0.1 - 4 mm.

A preferred building material of the present invention comprises
a) clay containing soil,
b) 0.05 - 2.0 w%, preferably 0.1 - 1.0 w%, especially 0.15 - 0.50 w%, based on the total dry weight of the clay containing soil, of at least one dispersant selected from polycarboxylate ether, and
c) 0.1 - 5 w%, preferably 1 - 3 w% based on the total dry weight of the clay containing soil, of at least one source of divalent cations, especially calcium hydroxide,

wherein the clay containing soil comprises or consists of clay particles, preferably with a particle size D90 between 1 - 10 µm, silt particles, preferably with a particle size D90 between 10 - 100 µm, and sand particles, preferably with a particle size D90 between 0.1 - 4 mm, and
wherein clay is selected from phyllosilicate and/or feldspar minerals, in particular from the group consisting of kaolinite, smectite, montmorillonite, illite, bentonite, hectorite, chlorite, anorthite, microcline, albite, oligoclase.

A preferred building material of the present invention comprises
a) clay containing soil,
b) 0.05 - 2.0 w%, preferably 0.1 - 1.0 w%, especially 0.15 - 0.50 w%, based on the total dry weight of the clay containing soil, of at least one dispersant selected from polycarboxylate ether, and
c) 0.1 - 5 w%, preferably 1 - 3 w% based on the total dry weight of the clay containing soil, of at least one source of divalent cations, especially calcium hydroxide,
wherein the polycarboxylate ether comprises or consists of
a) monomeric units of general formula (I) 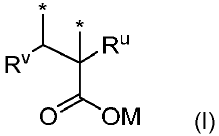 wherein
   R^{u} is H or methyl,
   R^{v} is H or COOM,
   M is selected from H, alkali metal, alkali earth metal, ammonium, or organic ammonium group,
   and wherein * describes the binding site into the polymer chain, and
b) monomeric units of general formula (II) 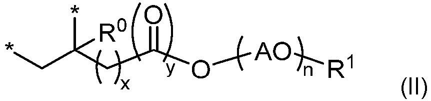 wherein
   R⁰ is H or methyl,
   R¹ is H, C1-C20 alkyl, aralkyl or aryl,
   A independently of another are alkylene groups with 2 - 4 C atoms,
   x = 0, 1 or 2,
   y = 0 or 1, and $n = 10 - 300 ,$
   and wherein * describes the binding site into the polymer chain,
   and wherein a molar ratio of monomeric units of general formula (I) to monomeric units of general formula (II) is between 0.5 - 5, preferably between 1 - 2.

A preferred building material of the present invention comprises
a) clay containing soil,
b) 0.05 - 2.0 w%, preferably 0.1 - 1.0 w%, especially 0.15 - 0.50 w%, based on the total dry weight of the clay containing soil, of at least one dispersant selected from polycarboxylate ether, and
c) 0.1 - 5 w%, preferably 1 - 3 w% based on the total dry weight of the clay containing soil, of at least one source of divalent cations, especially calcium hydroxide,

wherein the polycarboxylate ether comprises or consists of
   a) monomeric units of general formula (I) 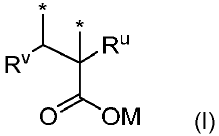 wherein
      R^{u} is H or methyl,
      R^{v} is H or COOM,
      M is selected from H, alkali metal, alkali earth metal, ammonium, or organic ammonium group,
      and wherein * describes the binding site into the polymer chain, and
   b) monomeric units of general formula (II) 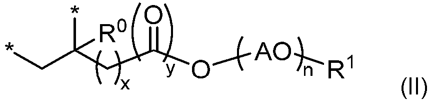 wherein
      R⁰ is H or methyl,
      R¹ is H, C1-C20 alkyl, aralkyl or aryl,
      A independently of another are alkylene groups with 2 - 4 C atoms,
      x = 0, 1 or 2,
      y = 0 or 1, and $n = 10 - 300 ,$
      and wherein * describes the binding site into the polymer chain,
      and wherein a molar ratio of monomeric units of general formula (I) to monomeric units of general formula (II) is between 0.5 - 5, preferably between 1 - 2,
and wherein the clay containing soil comprises or consists of clay particles, preferably with a particle size D90 between 1 - 10 µm, silt particles, preferably with a particle size D90 between 10 - 100 µm, and sand particles, preferably with a particle size D90 between 0.1 - 4 mm.

A preferred building material of the present invention comprises
a) clay containing soil,
b) 0.05 - 2.0 w%, preferably 0.1 - 1.0 w%, especially 0.15 - 0.50 w%, based on the total dry weight of the clay containing soil, of at least one dispersant selected from polycarboxylate ether, and
c) 0.1 - 5 w%, preferably 1 - 3 w% based on the total dry weight of the clay containing soil, of at least one source of divalent cations, especially calcium hydroxide,

wherein the polycarboxylate ether comprises or consists of
   a) monomeric units of general formula (I) 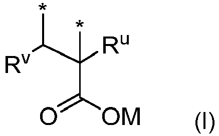 wherein
      R^{u} is H,
      R^{v} is H,
      M is selected from H, Na, Ca, or organic ammonium group,
      and wherein * describes the binding site into the polymer chain, and
   b) monomeric units of general formula (II) 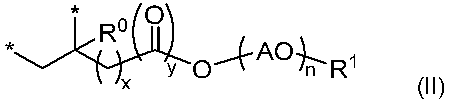 wherein
      R⁰ is H,
      R¹ is methyl,
      A is ethylene,
      x = 0,
      y = 1, and $n = 20 - 60 ,$
      and wherein * describes the binding site into the polymer chain,
      and wherein a molar ratio of monomeric units of general formula (I) to monomeric units of general formula (II) is between 0.5 - 5, preferably between 1 - 2,
and wherein the clay containing soil comprises or consists of clay particles, preferably with a particle size D90 between 1 - 10 µm, silt particles, preferably with a particle size D90 between 10 - 100 µm, and sand particles, preferably with a particle size D90 between 0.1 - 4 mm.

It is further preferred that any of the preferred building materials above is free from cement, in particular is free from Portland cement.

It is possible that a building material of the present invention additionally comprises at least one of pozzolanes, latent hydraulic materials, and admixtures different from the dispersants described above.

Pozzolans and latent hydraulic materials can be selected from the group consisting of ironmaking slag, steelmaking slag, silica fume, rice husk ash, burnt oil shale, calcined clay, and natural pozzolans such as volcanic ashes.

Admixtures can be selected from the group consisting of dispersants, air entrainers, defoamers, stabilizers, rheology modifiers, thickeners, accelerators, retarders, redispersible polymers, water repellent agents, strength enhancing additives, fibers, pigments and/or dyes, fire retardants, corrosion inhibitors, and/or biocides, provided that said admixtures are different from the dispersants as described above.

In another aspect, the present invention relates to an aqueous slurry comprising a building material as described above and water.

All features and embodiments as described above also apply to this aspect.

Preferably the weight ratio of water to clay containing soil in the aqueous slurry is between 0.1 - 1, preferably between 0.2 - 0.8, especially 0.3 - 0.5.

Means for mixing the building material with water are not particularly limited and are known to the skilled person. It is for example possible to mix the building material and water by means of a hand-held agitator, a Hobart mixer, a portable concrete mixer, a mixing truck, a mixing bucket, a paddle mixer, a jet mixer, a screw mixer, an auger mixer, a horizontal single shaft mixer, a twin shaft paddle mixer, a vertical shaft mixer, a ribbon blender, an orbiting mixer, a change-can mixer, a tumbling vessel, a vertical agitated chamber or air agitated operations. Mixing can be continuously, semi-continuously or batch-wise. Continuous mixing offers the advantage of a high material throughput.

Especially, the aqueous slurry is a workable composition. This means that the aqueous slurry preferably can be brought into a desired shape, for example by pouring into a mold, by rolling or spraying onto a support, by extruding or pressing, or by printing processes.

In particular, the aqueous slurry has rheological properties, especially flowability, suitable to bring it into a desired shape. Rheological properties can suitably be expressed and measured for example as slump flow according to standard EN 12350-5, flow time or V funnel test time according to standard EN 12350-9, or as viscosity and yield measurable on a rheometer such as the RheoCAD500.

Especially, the aqueous composition attains its workability, in other words attains its desired rheological parameters, at the time of mixing the building material with water and maintains workability for some time, preferably for not more than 24 hours, more preferably for not more than 6 hours, still more preferably for not more than 3 hours. It is desirable that the aqueous composition loses its workability over time, to allow for the shaped body to retain its shape after a desired time and, for example, allow for fast de-molding. In other words, it is desirable that the aqueous slurry develops a sufficient green strength within such time.

For example, where a mixture of clay containing soil and water has a certain slump flow, an aqueous slurry of the present invention which comprises the same amount of water has a slump flow which is increased by at least 50%, preferably at least 100%, directly after preparation of the aqueous slurry over the slump flow of the mixture of clay containing soil and water. In the same example, preferably, the slump flow of the inventive aqueous slurry decreases with time and drops to the same level as the mixture of clay containing soil and water within 24 hours, preferably within 6 hours, still more preferably within 3 hours of the preparation of the aqueous slurry. Slump flow is measured according to standard EN 12350-5 in this example.

It is therefore possible to decrease the amount of water needed to achieve a desired workability of an aqueous slurry of the present invention as compared to the same aqueous slurry not comprising the at least one dispersant selected from the group consisting of polyalkoxylated polymers. Thereby, the drying time can be reduced and/or the final strength of a shaped body obtained by hardening an aqueous slurry of the present invention can be increased.

The present invention also relates to a shaped body obtained by hardening an aqueous slurry as described above.

All features and embodiments as described above also apply to this aspect.

In particular, an aqueous slurry as described above can be brought into shape by pouring it into a mold, by rolling or spraying the aqueous slurry onto a support, by extruding or pressing the aqueous slurry, or by printing.

Hardening of the aqueous slurry proceeds over time, in particular by the evaporation of water. By hardening, a shaped body is formed that can retain its shape. Hardening can be accelerated especially by heating and/or by reducing ambient pressure. For example, it is possible to harden the aqueous slurry at temperatures between 60 - 100 °C. Hardening can also be accelerated by the addition of suitable co-binders, especially pozzolans and/or latent hydraulic materials, and of suitable admixtures. The shaped body can especially take the form of a brick, an adobe, a tile, a block, a slab, a panel, a wall, a pillar, a floor, and/or a render.

In another aspect, the present invention relates to a method for the manufacture of a solid construction material, comprising the steps of
(i) extracting a clay containing soil,
(ii) optionally adjusting the particle size of the clay containing soil, in particular adjusting the particle size of any of clay, silt, and/or sand contained,
(iii) preparing an aqueous slurry by mixing at least a portion of the clay containing soil, optionally being particle-size adjusted, with water,
(iv) intermixing at least one dispersant and at least one source of divalent cations with the aqueous slurry,
(v) shaping the aqueous slurry intermixed with dispersant and source of divalent cations, and
(vi) allowing the aqueous slurry to harden to obtain a solid construction material.

All features and embodiments as described above also apply to this aspect.

Preferably, the solid construction material is a shaped body in the form of a brick, an adobe, a tile, a block, a slab, a panel, a wall, a pillar, a floor, and/or a render.

Extraction of a clay containing soil can be carried out on site, for example by means for soil excavation. It is in particular possible to extract the clay containing soil from a clay quarry or clay pit. However, it is generally possible to extract the clay containing soil from other sources.

A method of the present invention does not cover the artificial assembly of the clay containing soil from individual components. For example, a method of the present invention does not cover a method where the clay containing soil is obtained by mixing pure clay, pure silt, and pure sand.

Adjusting the particle size may be carried out by means of sieving or sedimentation of the extracted clay containing soil, or by means of adding supplemental fractions of at least one of clay, silt, sand, and/or gravel. The content and particle size of the individual constituents will depend on the requirements of the solid construction material. For most applications it is preferred to remove any particles with a size of > 4 mm.

An aqueous slurry is prepared by mixing at least part of the optionally particle size adjusted clay containing soil with water, for example by means of a mixer as described above. Preferably, the weight ratio of water to clay containing soil in the aqueous slurry is between 0.1 - 1, more preferably between 0.2 - 0.8, especially 0.3 -0.5.

The term "intermixing" includes the addition and mixing of constituents. The mixing of the at least one dispersant and the at least one source of divalent cations with the aqueous slurry is possible by means of a mixer as described above.

According to embodiments, the at least one dispersant and the at least one source of divalent cations are intermixed with the aqueous slurry at the same time, for example in the form of a premix. Thereby, any errors due to wrong dosage of constituents can be minimized.

According to embodiments, the at least one dispersant and the at least one source of divalent cations are intermixed with the aqueous slurry at different times. Thereby, it is possible to first intermix the at least one dispersant with the aqueous slurry, followed by intermixing of the at least one source of divalent cations. It is likewise possible to first intermix the at least one source of divalent cations with the aqueous slurry, followed by intermixing of the at least one dispersant.

It is possible to intermix the at least one dispersant and the at least one source of divalent cations in the form of solids and/or in the form of aqueous preparations.

Preferably, in a method of the present invention, no cement, especially no Portland cement, is added.

According to preferred embodiments, in a method of the present invention, the at least one dispersant is selected form polycarboxylate ether and/or polyalkoxylated aryl formaldehyde condensate, preferably is a polycarboxylate ether comprising or consisting of
a) monomeric units of general formula (I) 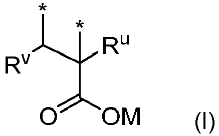 wherein
   R^{u} is H or methyl,
   R^{v} is H or COOM,
   M is selected from H, alkali metal, alkali earth metal, ammonium, or organic ammonium group,
   and wherein * describes the binding site into the polymer chain, and
b) monomeric units of general formula (II) 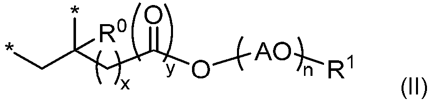 wherein
   R⁰ is H or methyl,
   R¹ is H, C1-C20 alkyl, aralkyl or aryl,
   A independently of another are alkylene groups with 2 - 4 C atoms,
   x = 0, 1 or 2,
   y = 0 or 1, and $n = 10 - 300 ,$
   and wherein * describes the binding site into the polymer chain,
and wherein a molar ratio of monomeric units of general formula (I) to monomeric units of general formula (II) is between 0.5 - 5, preferably between 1 - 2.

The shaping of the aqueous slurry intermixed with dispersant and source of divalent cations is possible by pouring the aqueous slurry into a mold, by rolling or spraying the aqueous slurry onto a support, by extruding or pressing the aqueous slurry, or by printing the aqueous slurry. Of course, the preferred way of shaping depends on the desired use of the solid construction material.

Hardening can be done as described above.

### Examples

Polymer 1 (Poly 1) used in the examples was a polycarboxylate ether consisting of monomeric units of general formula (I) above, wherein R^{u} is H, R^{v} is H, M is Na, and monomeric units of general formula (II) above, wherein R⁰ is Me, R¹ is H, A is ethylene, x = 1, y = 0, n = 54, and wherein the molar ratio of monomeric units of general formula (I) to monomeric units of general formula (II) is 3.5.

Polymer 2 (Poly 2) used in the examples was a polycarboxylate ether consisting of monomeric units of general formula (I) above, wherein R^{u} is H, R^{v} is H, M is Na, and monomeric units of general formula (II) above, wherein R⁰ is H, R¹ is methyl, A is ethylene, x = 0, y = 1, n = 54, and wherein the molar ratio of monomeric units of general formula (I) to monomeric units of general formula (II) is 1.9.

Polymer 3 (Poly 3) used in the examples was a polycarboxylate ether consisting of monomeric units of general formula (I) above, wherein R^{u} is H, R^{v} is H, M is Na, and monomeric units of general formula (II) above, wherein R⁰ is H, R¹ is methyl, A is ethylene, x = 0, y = 1, n = 22, and wherein the molar ratio of monomeric units of general formula (I) to monomeric units of general formula (II) is 1.4.

Comparative Polymer (Poly C) used in the examples was a sodium polyacrylate (Mw = 6000 g/mol), not comprising polyalkoxylated side chains.

Clay containing soil used in the examples contained 40 w% carbonates (calcite and dolomite), 31 w% quartz, 16 w% phyllosilicates (9 w% illite, 7 w% chlorite), and 13 w% feldspar (8 w% anorthite, 2 w% microcline, 2 w% albite, 1 w% oligoclase).

An aqueous slurry was prepared by first mixing a clay containing soil with water in a weight ratio as indicated in below tables. Then the respective polymer 1 - 3 as indicated in below tables and calcium hydroxide were intermixed on a Hobart mixer at the same time and in the amounts as indicated in below tables. Mixing was continued for two minutes.

Slump flow (S.F.) was tested with a minicone in accordance with standard EN 12350-5 after the time indicated in below tables. A reading of 40 mm is the minimum meaning that essentially no slump flow occurred.

**Table 1: Examples 1 - 2 (not inventive) and 3 - 5 (inventive)**

| **Example** | **1** | **2** | **3** | **4** | **5** | **6** | **7** |
|---|---|---|---|---|---|---|---|
| ratio w/s* | 1.0 | 1.0 | 1.0 | 1.0 | 1.0 | 1.0 | 1.0 |
| Polymer** | None | None | Poly C | Poly C | Poly 1 | Poly 2 | Poly 3 |
| | | | 0.57 w% | 0.57 w% | 0.27 w% | 0.25 w% | 0.25 w% |
| Ca(OH)** | None | 2.0 w% | none | 2.0 w% | 2.0 w% | 2.0 w% | 2.0 w% |
| S.F. @ 0 min [mm] | 88 | 56 | 40 | 40 | 158 | 164 | 140 |
| S.F. @ 60 min [mm] | 88 | 56 | | | 165 | 108 | 113 |
| S.F. @ 120 min [mm] | 88 | 56 | | | 155 | 87 | 102 |
| S.F. @ 24 hours [mm] | 88 | 56 | | | 140 | 64 | 72 |

| | | | | | | | |
|---|---|---|---|---|---|---|---|
| * weight ratio of water to clay containing soil ** in w% relative to the dry clay containing soil | | | | | | | |

**Table 2: Examples 6 - 7 (inventive)**

| **Example** | **6** | **7** |
|---|---|---|
| ratio w/s* | 0.5 | 0.5 |
| Polymer** | Poly 1 | Poly 2 |
| | 0.52 w% | 0.52 w% |
| Ca(OH)** | 2.0 w% | 2.0 w% |
| S.F. @ 0 min [mm] | 118 | 166 |
| S.F. @ 60 min [mm] | 101 | 71 |
| S.F. @ 120 min [mm] | 87 | 40 |
| S.F. @ 24 hours [mm] | 70 | 40 |

| | | |
|---|---|---|
| * weight ratio of water to clay containing soil ** in w% relative to the dry clay containing soil | | |

It can be seen from the above examples, that a combination of polyalkoxylated polymer (here polycarboxylate ether) and of calcium hydroxide is suitable to increase the slump flow of a building material based on clay containing soil. It is also especially possible that the workability decreases over time, which is desirable for the production of solid construction materials.

## Claims

1. A building material comprising
a) clay containing soil,
b) at least one dispersant selected from the group consisting of polyalkoxylated polymers, and
c) at least one source of divalent cations.

2. The building material as claimed in claim 1, **characterized in that** the clay containing soil comprises or consists of clay particles, preferably with a particle size D90 between 1 - 10 µm, silt particles, preferably with a particle size D90 between 10 - 100 µm, and sand particles, preferably with a particle size D90 between 0.1 - 4 mm.

3. The building material as claimed in at least one of the previous claims, **characterized in that** clay is comprised in at least 5 w%, preferably at least 10 w%, more preferably at least 20 w%, still more preferably between 20 - 70 w%, especially between 25 - 60 w%, based on the total dry weight of the clay containing soil.

4. The building material as claimed in at least one of the previous claims, **characterized in that** the clay is selected from phyllosilicate and/or feldspar minerals, in particular from the group consisting of kaolinite, smectite, montmorillonite, illite, bentonite, hectorite, chlorite, anorthite, microcline, albite, oligoclase.

5. The building material as claimed in at least one of the previous claims, **characterized in that** the at least one dispersant is comprised in 0.05 - 2.0 w%, preferably 0.1 - 1.0 w%, especially 0.15 - 0.50 w%, based on the total dry weight of the clay containing soil.

6. The building material as claimed in at least one of the previous claims, **characterized in that** the at least one dispersant is selected from polycarboxylate ether and/or polyalkoxylated aryl formaldehyde condensates.

7. The building material as claimed in at least one of the previous claims, **characterized in that** the at least one dispersant is a polycarboxylate ether comprising
a) monomeric units of general formula (I) 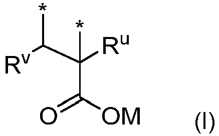 wherein
R^{u} is H or methyl,
R^{v} is H or COOM,
M is selected from H, alkali metal, alkali earth metal, ammonium, or organic ammonium group,
and wherein * describes the binding site into the polymer chain, and
b) monomeric units of general formula (II) 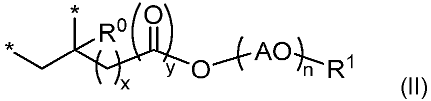 wherein
R⁰ is H or methyl,
R¹ is H, C1-C20 alkyl, aralkyl or aryl,
A independently of another are alkylene groups with 2 - 4 C atoms,
x = 0, 1 or 2,
y = 0 or 1, and $n = 10 - 300 ,$
and wherein * describes the binding site into the polymer chain,
and wherein a molar ratio of monomeric units of general formula (I) to monomeric units of general formula (II) is between 0.5 - 5, preferably between 1 - 2.

8. The building material as claimed in claim 7, wherein R^{u} is H, R^{v} is H, M is selected from H, Na, Ca, or organic ammonium group, R⁰ is H, R¹ is methyl, A is ethylene, x = 0, y = 1, and n = 20 - 60, preferably n = 40 - 60.

9. The building material as claimed in at least one of the previous claims, **characterized in that** the at least one source of divalent cations is comprised in 0.1 - 5 w%, preferably 1 - 3 w%, based on the total dry weight of the clay containing soil.

10. The building material as claimed in at least one of the previous claims, **characterized in that** the building material is free from cement, especially is free from Portland cement.

11. An aqueous slurry comprising a building material as claimed in at least one of claims 1 - 10 and water.

12. A shaped body obtained by hardening an aqueous slurry as claimed in claim 11.

13. A method for the manufacture of a solid construction material, comprising the steps of
(i) extracting a clay containing soil,
(ii) optionally adjusting the particle size of the clay containing soil, in particular adjusting the particle size of any of clay, silt, and/or sand contained,
(iii) preparing an aqueous slurry by mixing at least a portion of the clay containing soil, optionally being particle-size adjusted, with water,
(iv) intermixing at least one dispersant and at least one source of divalent cations with the aqueous slurry,
(v) shaping the aqueous slurry intermixed with dispersant and source of divalent cations, and
(vi) allowing the aqueous slurry to harden to obtain a solid construction material.

14. The method as claimed in claim 13, **characterized in that** the at least one dispersant is selected form polycarboxylate ether and/or polyalkoxylated aryl formaldehyde condensate, preferably is a polycarboxylate ether comprising or consisting of
a) monomeric units of general formula (I) 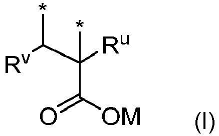 wherein
R^{u} is H or methyl,
R^{v} is H or COOM,
M is selected from H, alkali metal, alkali earth metal, ammonium, or organic ammonium group,
and wherein * describes the binding site into the polymer chain, and
b) monomeric units of general formula (II) 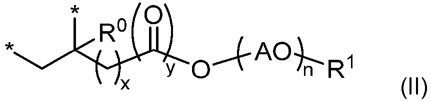 wherein
R⁰ is H or methyl,
R¹ is H, C1-C20 alkyl, aralkyl or aryl,
A independently of another are alkylene groups with 2 - 4 C atoms,
x = 0, 1 or 2,
y = 0 or 1, and $n = 10 - 300 ,$
and wherein * describes the binding site into the polymer chain,
and wherein a molar ratio of monomeric units of general formula (I) to monomeric units of general formula (II) is between 0.5 - 5, preferably between 1 - 2.

15. The method as claimed in at least one of claims 13 - 14, **characterized in that** the weight ratio of water to clay containing soil in the aqueous slurry is between 0.1 - 1, preferably between 0.2 - 0.8, especially 0.3 - 0.5.
